# EUROPEAN PATENT SPECIFICATION

(11) **EP 1 795 311 B1**
(45) Date of publication and mention of the grant of the patent: **21.09.2011**
(21) Application number: 06025115.4
(22) Date of filing: 05.12.2006
(51) Int. Cl.: B25F 5/02, B23B 49/00, B25D 1/00

(54) **Power impact tool**
Kraftangetriebenes Schlagwerkzeug
Outil à impact motorisé

(30) Priority: 09.12.2005 JP 2005357010
(43) Date of publication of application: 13.06.2007
(73) Proprietor: Panasonic Electric Works Co., Ltd., Kadoma-shi Osaka (JP)
(72) Inventor: Hashimoto, Koichi, Kadoma-shi Osaka (JP); Tsubakimoto, Hiroyuki, Kadoma-shi Osaka (JP); Tatsu, Kunihiko, Kadoma-shi Osaka (JP)
(74) Representative: Samson & Partner

(56) References cited:
- EP-A2- 1 099 517
- DE-A1- 19 924 552
- DE-U1- 9 406 626
- GB-A- 2 404 891
- US-A1- 2002 125 857
- US-A1- 2005 015 935
- US-A1- 2005 082 920

## Description

The present invention relates to a power impact tool; and, more particularly, to a power impact tool according to the preamble of claim 1 having a striking-motion-activated mode for transferring a rotational force and applying a striking force in an axial direction and a striking-motion-deactivated mode for transferring only the rotational force. Such a tool is known from DE 9406626 U1.

As for a power impact tool which is capable of transferring a rotational force and applying a striking force in an axial direction to an output bit, there has been provided a hammer drill for use in a concrete boring operation and the like. When such a hammer drill is provided with a striking-motion-deactivated mode as an addition, the same hammer drill can be used to create a hole on a concrete (the concrete boring operation) as well as to fasten a screw to an anchor inserted into the hole (a screw fastening operation), wherein the striking-motion-deactivated mode is configured to transfer only the rotational force while applying no striking force in the axial direction.

By allowing a fastening torque to be adjusted to a desired fastening torque with a fastening torque-adjusting clutch thereof, it is convenient to use such a tool having the striking-motion-deactivated mode when performing the screw fastening operation.

In case of using a heavy hammer drill, two hands are required to grip both a grip portion and an auxiliary grip portion. Here, the grip portion extends vertically downwardly from a rear end portion of a housing and the auxiliary grip portion extends vertically downwardly from a front end portion of the housing.

It is apparent that the operation can be performed with only one hand while balancing its weight, given that if the grip portion is vertically downwardly extended from an intermediate portion of the housing. However, when employing a heavy battery pack in such a configuration by attaching the battery pack to a bottom of the grip portion in a heavy weight power impact tool as disclosed in Japanese Patent Laid-open Application No. 2002-233673, the rigidity of the housing can be susceptible to a problem unless a reinforcing connecting portion is provided to connect a leading end side of the housing with the grip portion.

When providing a clutch handle at a front end portion of the housing, the reinforcing connecting portion needs to be connected to the front end portion of the main body at the back of the clutch handle and to the free end portion of the grip portion, and needs to be disposed behind the clutch handle while being disposed in front of the grip portion in order to allow manipulation of the clutch handle. In this circumstance, because the grip portion is required to be disposed at a rear portion of the housing so as to ensure a space for a hand to grip the grip portion between the connecting portion and the grip portion, the weight balance is lost. In case of elongating the housing by design, the connection and the grip portion can be provided while maintaining the weight balance. Yet, the shortcoming of this elongation is that the overall length of the power impact tool gets increased.

EP 1 099 517 A2 discloses a power tool including a battery pack, a first housing assembly, a second housing assembly and an auxiliary handle. The battery pack clips to the first housing assembly and provides a source of stored electric power. The first housing assembly includes a first housing, an anchor or attachment post, a motor assembly, a trigger assembly and a set of electrical contacts. The second housing assembly includes a gear case, a geartrain assembly and a chuck. The first housing includes a wall member that defines a structure having a first cavity and a handle portion. The first housing extends in a first generally fore-aft direction and preferably forms a rear portion of the power tool. The handle portion includes a grip, a hand guard portion, a trigger aperture, a first abutting surface and an attachment hook aperture. The grip is sized to permit a technician to comfortably operate and control the tool. The hand guard portion wraps around the forward side of the handle portion and terminates at a plane which approximately coincides with the bottom end of the first abutting surface. An attachment hook aperture is formed in the forward surface of the hand guard portion.

It is, therefore, an object of the present invention to provide a compact and conveniently useable power impact tool while having a good weight balance even with a reinforcing connecting portion disposed therewith.

In accordance with the present invention, there is provided a power impact tool according to claim 1 including a striking-motion-activated mode for transferring a rotational force and applying a striking force in an axial direction of rotation to an output bit held by a chuck; a striking-motion-deactivated mode for transferring only the rotational force to the output bit; a main body accommodating the chuck at a front end portion thereof; a clutch, operating in the striking-motion-deactivated mode, for applying an adjusted fastening torque to the chuck; a clutch handle for setting the fastening torque and disposed at the front end portion of the main body; a grip including a base portion, which is connected to the main body at a location between the front end portion and a rear end portion of the main body, and a free end portion accommodating a battery pack, a trigger switch being disposed at the base portion of the grip; and a reinforcing connecting portion connected to the front end portion of the main body at the back of the clutch handle and also connected to the free end portion of the grip, wherein the reinforcing connecting portion is disposed in front of the grip; and a part protruded most forward among the reinforcing connecting portion is disposed forward of a rear end of the clutch handle and is located directly in front of the trigger switch, and a part of the reinforcing connecting portion disposed behind the clutch handle retreats backward toward the free end portion of the grip.

The reinforcing connecting portion can be provided while allowing manipulations of the clutch handle and the trigger switch disposed on the grip portion.

The power impact tool in accordance with the present invention has a reinforcing connecting portion disposed at a front side of the grip portion. A part of the reinforcing connecting portion is connected to the front end portion of the main body at the back of the clutch handle and to the free end portion of the grip, wherein the reinforcing connecting portion is disposed in front of the grip; and a part protruded most forward among the reinforcing connecting portion is located directly in front of a trigger switch disposed at the base portion of the grip, and a part of the reinforcing connecting portion disposed behind the clutch handle retreats backward toward the free end portion of the grip. Accordingly, even if the grip portion is not provided at a rearward portion of the housing, it is possible to ensure a space for allowing manipulations of the clutch handle and the trigger switch disposed on the grip portion. Accordingly, the grip portion may be disposed at a position while allowing a weight balance. Hence, the power impact tool of the present invention has a good manipulability and provides a sufficient strength to the housing with the use of the reinforcing connecting portion.

The above and other objects and features of the present invention will become apparent from the following description of embodiments, given in conjunction with the accompanying drawings, in which:
Fig. 1 is a side view of one example in accordance with an embodiment of the present invention;
Fig. 2 is a vertical cross sectional view showing a state in which a striking-motion-deactivated mode is set, in accordance with the embodiment of the present invention;;
Fig. 3 is a horizontal cross sectional view showing the striking-motion-deactivated mode in accordance with the embodiment of the present invention;
Fig. 4 is a vertical cross sectional view showing a state in which a striking-motion-activated mode is set, in accordance with the embodiment of the present invention;
Fig. 5 is a horizontal cross sectional view showing the striking-motion-activated mode in accordance with the embodiment of the present invention;
Fig. 6A is a perspective view showing one embodiment of the present invention, and Fig. 6B shows a typical shank thereof;
Figs. 7A to 7D show cross sectional views of Fig. 1, cut along the lines 7A-7A, 7B-7B, 7C-7C, and 7D-7D, respectively;
Fig. 8 is an exploded view showing a portion of a fastening torque adjusting clutch in accordance with the embodiment of the present invention; and
Fig. 9 is a partial cross sectional view of another example in accordance with the embodiment of the present invention.

Hereinafter, there will be described embodiments of the present invention with reference to the accompanying drawings.

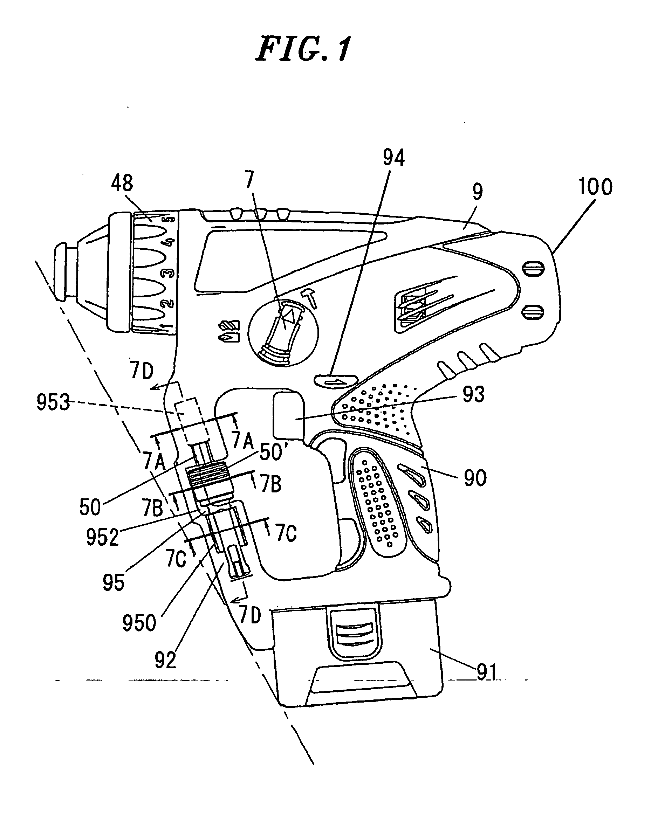

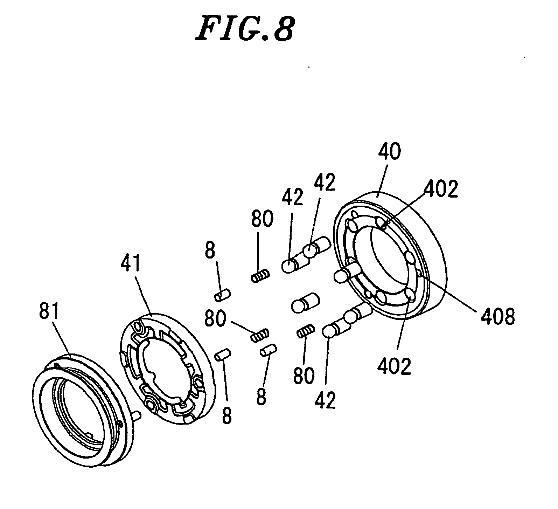

In an embodiment of the present invention as shown in Figs. 1 to 9, it is discussed that a power tool shown thereof is a hammer drill capable of transferring a rotational force and applying a striking force in an axial direction and includes a striking-motion-deactivated mode that is capable of transferring only the rotational force to an output bit. Reference numeral 9 in the drawings designates a housing with which a grip portion 90 is formed integrally so as to extend downwardly therefrom. A battery pack 91 is detachably attached to the bottom of the grip portion 90. A housing-reinforcing connecting portion 92 is integrally formed between the bottom frontal end of the grip portion 90 and the front end of the housing 9. Reference numeral 93 in the drawings designates a trigger switch disposed at a base portion of the grip portion 90. Disposed within the rear end portion of the housing 9 is a motor 19 that can be activated or deactivated by the actuation of the trigger switch 93 and also can change its direction of rotation in response to the manipulation of a direction-changing lever 94. The housing 9 includes a main body 100 accommodating moving parts including a chuck portion 51 and the motor 19 at a front end and a rear end portion thereof, respectively; a grip portion 90 having the base portion connected to a central portion of the main body and the bottom (or free) end portion accommodating the battery pack 91; and the reinforcing connecting portion 92.

A connecting shaft 13 is operatively connected to an output shaft 10 of the motor 19 through gears 11 and 12. The connecting shaft 13 is provided at its front end with a pinion 14 integrally formed therewith. A motion conversion member 2 is disposed at an intermediate part of the connecting shaft 13. The motion conversion member 2 includes a rotating portion 20 affixed to and rotatable with the connecting shaft 13 as a unit, an outer race 21 rotatably fitted to an inclined surface of the rotating portion 20, and a rod 22 protruding from the outer race 21. The rod 22 is connected to a piston 30 that can be moved within a cylinder 3 along an axial direction.

A collar 15 that forms the engaging clutch in cooperation with the rotating portion 20 is provided on the connecting shaft 13 in such a fashion that the collar 15 can rotate with the connecting shaft 13 as a unit and also can be slid in an axial direction with respect to the connecting shaft 13. The collar 15 is pressed against the rotating portion 20 by means of a spring 16 into engagement with the rotating portion 20 to thereby transfer the rotational force of the connecting shaft 13 to the rotating portion 20. As the rotating portion 20 makes rotational movement, the rod 22 and the outer race 21 whose rotation about the connecting shaft 13 is restrained by being connected to the piston 30 are subjected to oscillating movement. This causes the piston 30 to reciprocate in its axial direction.

If a switching handle 7 (see Fig. 1) disposed on a flank side of the housing 9 is manipulated, the collar 15 moves forward against the spring 16 and is disengaged from the rotating portion 20. Under this condition, no rotational force is transferred to the rotating portion 20 and no reciprocating movement is induced in the piston 30.

The cylinder 3 is rotatable about it axis, on the outer circumferential surface of which a rotating body 40 having a gear meshed with the pinion 14 of the connecting shaft 13 is coupled for sliding movement in an axial direction of the cylinder 3 and also for rotational movement with respect to the cylinder 3. At one side of the rotating body 40, a clutch plate 41 is secured to the cylinder 3.

The rotating body 40 is of a ring shape and has a plurality of axially penetrating holes into which steel balls 42 are received. A clutch spring 45 is disposed to press a ball retainer (thrust plate) 44 against the steel balls 42. Pressing action of the clutch spring 45 brings the steel balls 42 into engagement with conical engaging recesses formed on the clutch plate 41.

During the time when the steel balls 42 retained in the holes of the rotating body 40 are engaged with the recesses of the clutch plate 41, the rotating body 40 rotates about the axis of the cylinder 3 together with the clutch plate 41 as a unit, thereby ensuring that the rotational force of the connecting shaft 13 is transmitted to the cylinder 3 through the rotating body 40 and the clutch plate 41. The clutch spring 45 that makes contact with a ball retainer 44 at one end is supported at the other end by means of a movable plate 46 lying around the outer periphery of the cylinder 3. Along with the rotation of a clutch handle (or a dial) 48, the movable plate 46 can be moved in an axial direction of the cylinder 3 to thereby change the level of compression of the clutch spring 45.

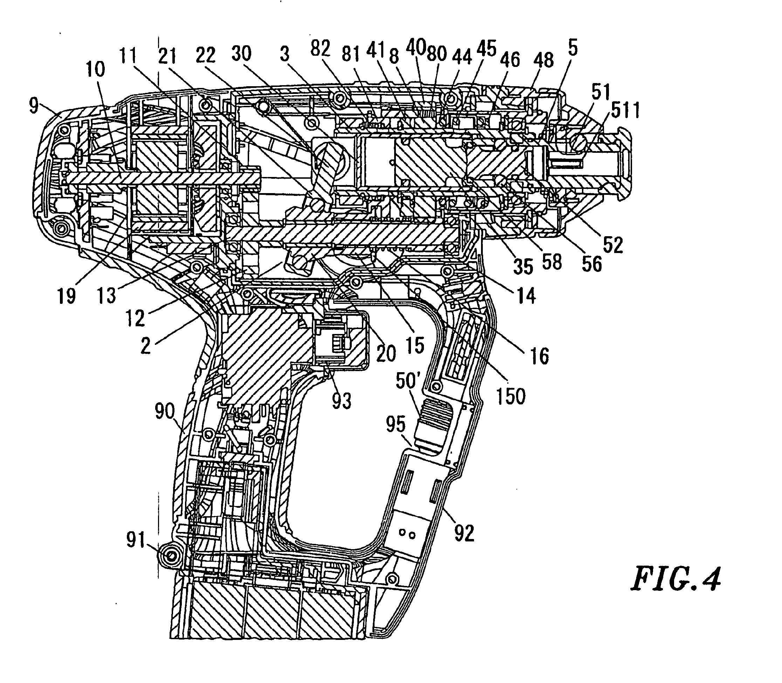

The pin 8 for directly coupling the rotating body 40 serving as a driving member to the clutch plate 41 functioning as a driven member (see Fig. 4) is provided at the rotating body 40. As the pin 8 is pressed by the spring 80 to protrude toward and engage with the clutch plate 41, the rotating body 40 and the clutch plate 41 get directly coupled to each other, thus ensuring that the rotational force of the rotating body 40 is constantly transferred to the clutch plate 41 and the cylinder 3.

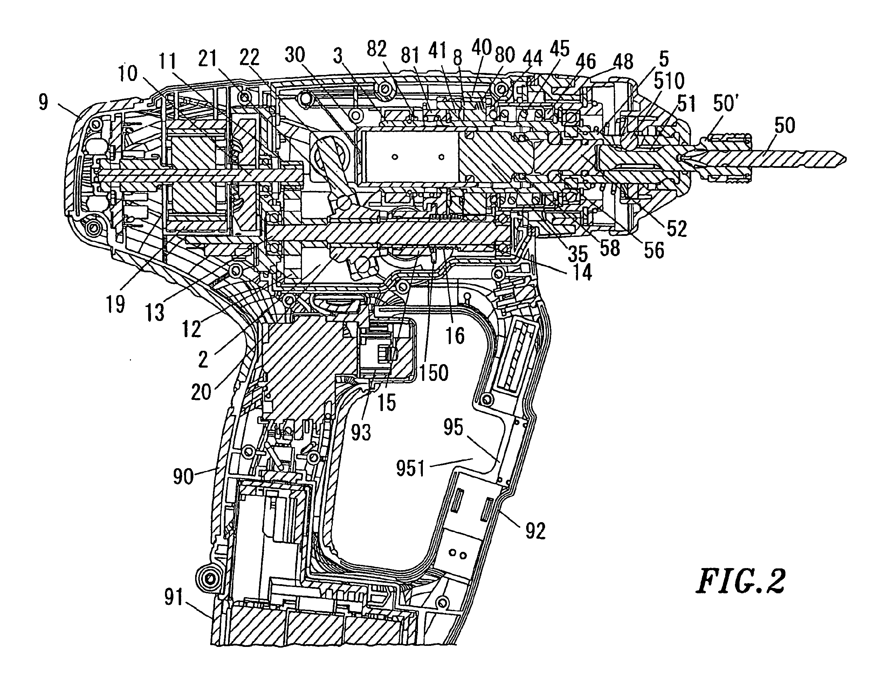

A conversion plate 81 is disposed around the outer circumference of the cylinder 3 in an axially movable manner. If the conversion plate 81 is pressed by a spring 82 to move forward, the distal end of the direct-coupling pin 8 is placed at a boundary surface of the rotating body 40 and the clutch plate 41 as shown in Fig. 2, thus releasing the direct coupling between the rotating body 40 and the clutch plate 41. Further, when the collar 15 is moved into engagement with the rotating portion 20, the conversion plate 81 is pressed by the collar 15 and moves backward against the spring 82, thus allowing the pin 8 to directly couple the rotating body 40 to the clutch plate 41.

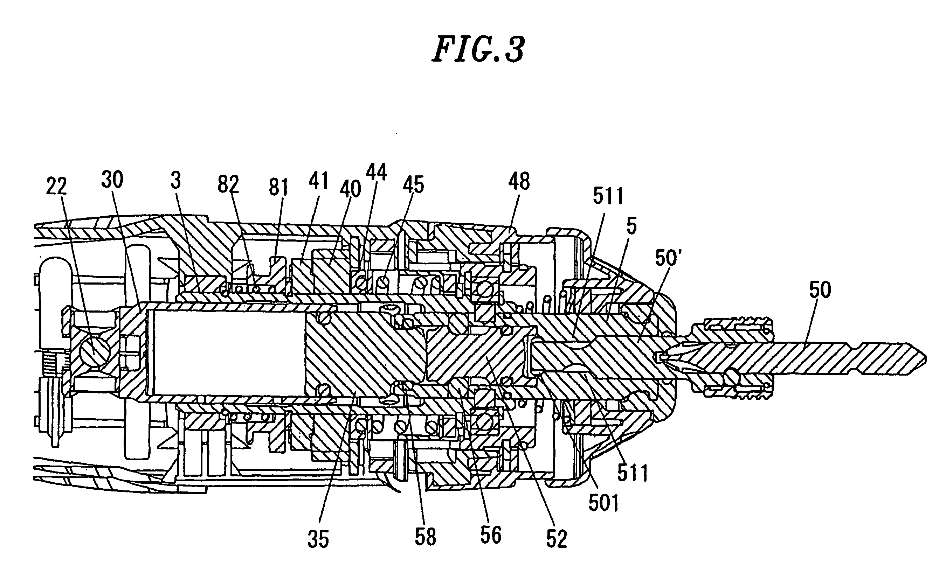

A spindle 5 is attached to the axial front end of the cylinder 3 for unitary rotation with the cylinder 3. The spindle 5 is provided at its axial front end with the chuck portion 51 for holding an output bit 50. The chuck portion 51, which corresponds to an SDS-plus (Special Direct System Plus) type shank indent to be held by the chuck portion, includes a removal-inhibiting ball (or sprung ball) 510 and a rotation-transferring internal protrusion (or wedge) 511 (see Fig. 3). The chuck portion 51 is designed to hold the output bit 50 in such a manner that the output bit 50 can be rotated with the chuck portion 51 as a unit while sliding axially within a predetermined range of movement.

The piston 30 is of a cylindrical shape having a closed rear end and an opened front end. A striker 35 is slidably received within the piston 30. As the piston 30 makes reciprocating movement, the striker 35 is also caused to reciprocate, at which time the air within the space of the piston 30 enclosed by the striker 35 functions as an air spring. By the reciprocating movement thus caused, the striker 35 applies a striking force to the output bit 50 in an axial direction through an intermediate member 52 axially slidably retained within the spindle 5. Reference numeral 56 in the drawings designates a ball for preventing the intermediate member 52 from being backwardly removed out of the spindle 5.

Figs. 2 and 3 illustrate the striking-motion-deactivated mode, i.e., a condition devoted to screw tightening. In order to attain this mode, the collar 15 is caused to move forward by the manipulation of the switching handle 7, thus releasing the engagement between the collar 15 and the rotating portion 20. Concurrently, the flange portion 150 of the collar 15 removes the pushing force applied to the conversion plate 81, in response to which the conversion plate 81 moves forward under the pressing force of the spring 85 to push the direct-coupling pin 8. This releases the direct coupling between the rotating body 40 and the clutch plate 41. Thus, the rotational force that the rotating body 40 receives from the pinion 14 of the connecting shaft 13 is transferred to the spindle 5 through the steel balls 42, the clutch plate 41 and the cylinder 3. At this moment, an O-ring 58 disposed on the rear inner circumference of the spindle 5 is resiliently engaged with the front outer circumference of the striker 35, thereby preventing the striker 35 and the intermediate member 52 from any axial movement. Accordingly, no inadvertent movement is caused to the striker 35 and the intermediate member 52.

In the process of tightening, e.g., a screw, through the use of the rotating output bit 50 under the striking-motion-deactivated mode, if the load torque becomes greater than the engaging force between the steel balls 42 and the clutch plate 41 imparted by the clutch spring 45, the steel balls 42 get released from the engaging recesses of the clutch plate 41, thus interrupting the transfer of the rotational force from the rotating body 40 to the clutch plate 41 (cylinder 3). This restrains the tightening torque.

The tightening torque can be increased by turning the clutch handle 48 as set forth above and displacing the movable plate 46 backward to increase the level of compression by the clutch spring 45. This means that the rotating body 40 and the clutch plate 41 cooperate with the steel balls 42, the movable plate 46 and the clutch spring 45 to form a torque-adjusting clutch 4. Further, when the clutch spring 45 has been compressed to the maximum extent by the manipulation of the clutch handle 48, the steel balls 42 are kept in a condition that it cannot be escaped from the engaging recesses. This condition is suitable for what is called a drilling task.

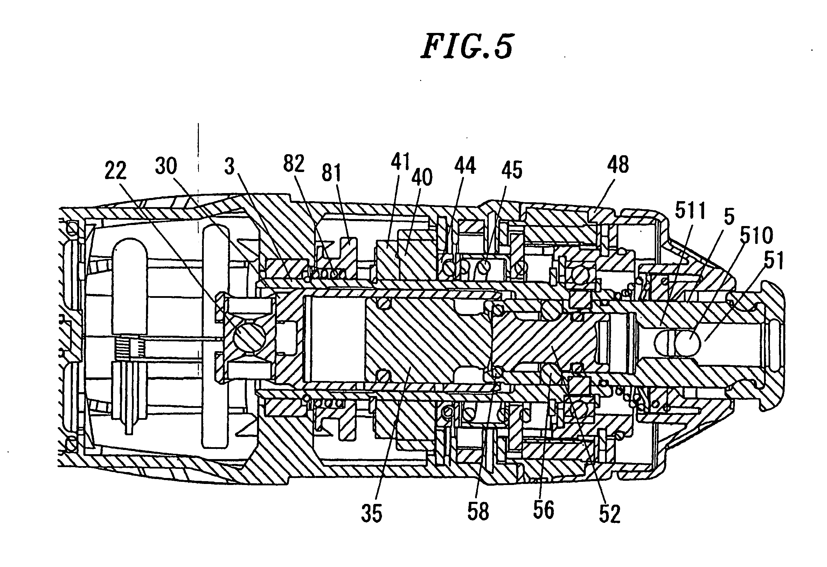

Under the situation illustrated in Figs. 4 and 5 wherein the collar 15 is moved backward into engagement with the rotating portion 20 upon manipulating the switching handle 7, the collar 15 causes the conversion plate 81 to move backward against the spring 82, thus ensuring that the rotating body 40 and the clutch plate 41 are directly coupled by the direct-coupling pin 8. Accordingly, the piston 30 is reciprocated by the motion conversion member 2, while the cylinder 3 and the spindle 5 are rotatably driven at all times. In this connection, as the output bit 50 is pressed against an object to be drilled, the output bit 50 and the intermediate member 52 are moved backward, to thereby push the striker 35 in a rearward direction beyond the position wherein the striker 35 is retained in place by the O-ring 58. Thus, the reciprocating movement of the piston 30 leads to the reciprocating movement of the striker 35, which means that the striker 35 is in condition for applying a striking force to the output bit 50 in an axial direction through the intermediate member 52. This ensures that the rotational force and the axial striking force are transferred to the output bit 50.

The switching handle 7 is adapted to displace the collar 15 out of engagement with the rotating portion 20. The pressing force of the spring 16 is used for causing the collar 15 to move toward and smoothly engage with the rotating portion 20. The spring 16 is designed to have a pressing force greater than that of the spring 82 for pressing the conversion plate 81. Furthermore, the pressing force of the spring 82 is greater than that of the spring 80 for pressing the direct-coupling pin 8.

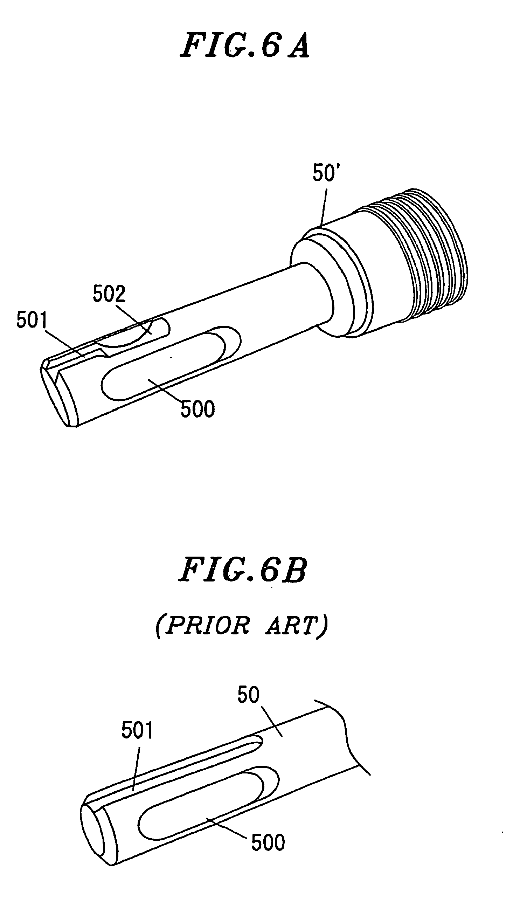

In the meantime, an output bit 50 such as a drill bit or a driver bit is provided without a SDS-plus type shank for use with the hammer drill and therefore is mounted with the use of an adapter 50' having the SDS-plus type shank. The SDS-plus type shank employed in the adapter 50' differs somewhat from a typical SDS-plus type shank shown in Fig. 6B.

More specifically, as illustrated in Fig. 6A, the SDS-plus type shank of the adapter 50' is the same as the typical SDS-plus type shank in that the adapter 50' has a closed groove 500 to engage with the removal-inhibiting ball 510; and a slide groove 501 with which the rotation-transferring internal protrusion 511 is slidingly engaged, the closed groove 500 being closed at an end of the shank portion whereas the slid groove 501 being opened at the end of the shank portion. A distinctive feature of the adapter 50' resides in that the axial length of the slide groove 501 measured from the rear end of the shank is short. In other words, at the time of mounting the adapter 50' into the chuck portion 51, the depth of insertion of the adapter 50' is restrained by the stopping action of the internal protrusion 511. This prevents the adapter 50' from moving backward into contact with the front end of the intermediate member 52 at its rear end.

Thus, even when the output bit 50 such as a drill bit or a driver bit is mounted through the adapter 50' in the striking-motion-activated mode, i.e., hammer drill mode, where the rotational force and the striking force are applied jointly, there lies no possibility that the striking force is applied to the adapter 50'. This also precludes the possibility that the adapter 50', the output bit 50 such as a drill bit or a driver bit, and the screw or the like in contact with the distal end of the output bit 50 are damaged by the striking vibration. In addition, the striker 35 continues to be retained in position by means of the O-ring 58 for the reasons noted above.

In the event that, the output bit 50, which is a hammer drill bit having the typical SDS-plus type shank illustrated in Fig. 6B, is mounted to the chuck portion 51, it can be moved backward to such an extent that the rear end of the output bit 50 makes contact with the intermediate member 52. Furthermore, the striker 35 can be displaced backward through the intermediate member 52 beyond the position where the striker 35 is retained in place by means of the O-ring 58, in which condition the striking force as well as the rotational force is applied to the output bit 50.

The slide groove 501 of the adapter 50' differs not only in length but also in inner end shape from that of the typical shank. The internal protrusion 511 has a front end comprised of a flat inclined surface. For this reason, if the front end of the internal protrusion 511 makes contact with the inner end of the slide groove 501 of the typical shank shown in Fig. 6B, the side edges of the inner end of the slide groove 501 can get worn out. To avoid such a situation, the slide groove 501 of the adapter 50' is designed to have a slant inner end surface 502 capable of making surface-to-surface contact with the front end of the internal protrusion 511.

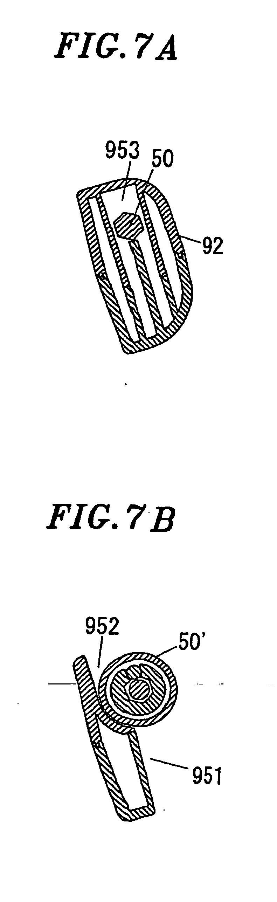

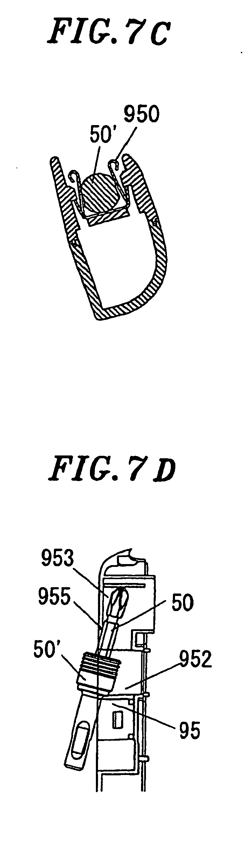

Furthermore, the adapter 50' may be stored, when not in use, within a holder portion 95 provided in the connecting portion 92 of the housing 9. As depicted in Figs. 1 and 7, the holder portion 95 is in the form of a recessed space opened to one side of the connecting portion 92. The holder portion 95 has a spring plate 950 for retaining the shank portion of the adapter 50', an enlarged recess part 952 for receiving the large diameter chuck portion of the adapter 50', and a void part 953 for accommodating the output bit 50 when the adapter 50' is stored with the output bit 50 attached thereto.

At the other side of the enlarged recess part 952, the connecting portion 92 has a reduced thickness to provide an access space 951 through which the fingers of a user gain access to the large diameter chuck portion of the adapter 50' to take out the adapter 50'. This access space 951 is disposed at a side of the connecting portion 92, where the side faces the grip portion 90. Further, the access space 951 is located approximately at a middle of the connecting portion 92 so as not to face the trigger switch 93.

With the access space 951, the adapter 50' is easily removed from the holder portion 95 opened at one side by, e.g. engaging the fingers of the user through the access space 951. There is a case in which the spring force of the spring plate 950 is required to be strong in order to prevent the adapter 50' from being released out of the holder portion 95 when exposed to the striking vibration especially since the user may exert a force from the holder portion 95 formed while being opened at one side toward a direction corresponding to the adapter 50' releasing direction. However, even under such a condition, the release of the adapter 50' can be performed easily owing to the access space 951 provided. Further, even in a case where the trigger switch 93 is engaged while one hand is gripping the grip portion 90, the fingers of the other hand still can access into the access space 951. This ensures that the adapter 50' can be removed conveniently at all times.

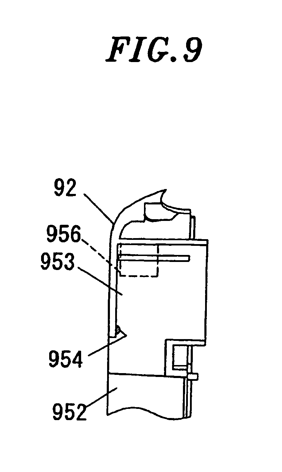

In order to store the adapter 50' carrying the output bit 50 in the holder portion 95 with no removal of the output bit 50, the front end of the output bit 50 is inserted into the void part 953 as illustrated in Fig. 7D, after which the large diameter chuck portion of the adapter 50' is received within the enlarged recess part 952 and the shank portion of the adapter 50' is pushed into the seat portion of the spring plate 950. The above-noted storing operations are conducted in the reverse order to take out the adapter 50'. However, in the process of taking out the adapter 50', it is likely that, as can be seen in Fig. 7D, the output bit 50 may come in contact with the side wall edge 955 of the connecting portion 92, thereby causing scratches or damages to the edge 955. For this reason, it is desirable to provide a reinforcing rib 954 on the side wall of the connecting portion 92 as illustrated in Fig 9. Further, scratches to the inner surface of the housing 9 caused by the output bit 50 and noises therefrom can be generated when the striking force is present. As these scratches and noises can be prevented, a cushion member 956 capable of resiliently contacting with the leading end of the output bit 50 may be provided at an inner leading end of the void part 953.

The reinforcing connecting portion 92 is connected to the front end portion of the main body at the back of the clutch handle 48 and to the free end portion of the grip portion 90. Further, it is disposed behind the clutch handle 48 while retreating backward toward the free end portion of the grip portion 90 while being disposed in front of the grip portion 90. Moreover, a part protruded most forward among the reinforcing connecting portion 92 is located directly in front of a trigger switch 93 disposed at the base portion of the grip portion 92. In this manner, while not only the grip portion 90 is located at a position allowing an overall balance but also the manipulations of the clutch handle 68 and the trigger switch 93 are not affected, the connecting portion 92 for a reinforcement purpose can be provided. Furthermore, as shown by an example in Figs. 1 to 9, while maintaining between the grip portion 90 and the connecting portion 92 a space into which a hand for gripping the grip portion 90 and fingers for the access space 951 are allowed to be engaged, the connecting portion 92 is avoided from going forwardly over a line (See Fig. 1) which connects the bottom end of the battery pack 91 and the leading end portion of the chuck portion 51. In this regard, when the power tool is forcefully leant forwardly, the connecting portion 92 can be prevented from being damaged by collision thus caused or the adapter 50' is prevented from being released out of the holder portion 95 due to collision thus caused.

Although in the embodiment of the present invention that the adapter 50' is used to install the output bit 50 into the holder portion 95, the output bit 50 can be installed directly into the holder portion 95. Further, in the example shown in Figs. 1 to 9, a concrete drill bit to be used with a hammer drill can be dangerous when exposed because of its sharp edges. Thus, by configuring the total length of the holder portion 95 to be shorter than that of the concrete drill bit, the holder portion 95 is refrained from accommodating the concrete drill bit thereinto.

In the embodiment of the present invention, it is further noted that a SDS-top or a SDS-max type shank can also be used in place for the SDS-plus type shank instead. Further, there are typically two wedges and two sprung balls employed for the shank. However, as for simplicity purpose, only one set of the wedges and the sprung balls are discussed as shown in Figs. 6A and 6B. Likewise, there are typically two to three slide grooves and two closed grooves to be used in the embodiment of the present invention, despite only one set of the above is discussed as well.

While the invention has been shown and described with respect to the embodiments, it will be understood by those skilled in the art that various changes and modification may be made without departing from the scope of the invention as defined in the following claims.

## Claims

1. A power impact tool comprising:
a striking-motion-activated mode for transferring a rotational force and applying a striking force in an axial direction of rotation to an output bit (50) held by a chuck (51);
a striking-motion-deactivated mode for transferring only the rotational force to the output bit (50);
a main body (100) accommodating the chuck (51) at a front end portion thereof;
a clutch, operating in the striking-motion-deactivated mode, for applying an adjusted fastening torque to the chuck (51);
a clutch handle (48) for setting the fastening torque and disposed at the front end portion of the main body (100); and
a grip (90) including a base portion, which is connected to the main body (100) at a location between the front end portion and a rear end portion of the main body (100), and a free end portion accommodating a battery pack (91), a trigger switch (93) being disposed at the base portion of the grip (90),
**characterized in that** the power impact tool further comprises
a reinforcing connecting portion (92) connected to the front end portion of the main body (100) at the back of the clutch handle (48) and also connected to the free end portion of the grip (90);
the reinforcing connecting portion (92) is disposed in front of the grip (90);
a part protruded most forward among the reinforcing connecting portion (92) is disposed forward of a rear end of the clutch handle (48) and is located directly in front of the trigger switch (93); and
a part of the reinforcing connecting portion (92) disposed behind the clutch handle (48) retreats backward toward the free end portion of the grip (90).

## Patentansprüche

1. Kraftangetriebenes Schlagwerkzeug umfassend:
einen Schlagbewegungs-aktivierten Modus zum Übertragen einer Drehkraft und zum Anwenden einer Schlagkraft in eine axiale Richtung der Drehung auf einen Ausgabe-Einsatz (50), der in einer Spannvorrichtung (51) gehalten ist;
einen Schlagbewegungs-deaktivierten Modus zum Übertragen nur der Drehkraft auf den Ausgabe-Einsatz (50);
einen Hauptkörper (100), der die Spannvorrichtung (51) an einem vorderen Endbereich davon aufnimmt;
eine Kupplung, die in dem Schlagbewegungs-deaktivierten Modus in Betrieb ist, zum Anwenden eines angepassten Befestigungs-Drehmoments auf die Spannvorrichtung (51);
eine Kupplungs-Handhabe (48) zum Einstellen des Befestigungs-Drehmoments und die an dem vorderen Endbereich des Hauptkörpers (100) angeordnet ist; und
einen Griff (90), der einen Basisbereich umfasst, der mit dem Hauptkörper (100) an einer Stelle zwischen dem vorderen Endbereich und einem hinteren Endbereich des Hauptkörpers (100) verbunden ist, und einen freien Endbereich, der ein Batteriepack (91) aufnimmt, einen Triggerschalter (93), der an dem Basisbereich des Griffs (90) angeordnet ist,
**dadurch gekennzeichnet, dass** das kraftangetriebene Schlagwerkzeug weiter umfasst:
einen Verstärkungs-Verbindungsbereich (92), der mit dem vorderen Endbereich des Hauptkörpers (100) an der Rückseite der Kupplungs-Handhabe (48) verbunden ist und auch mit dem freien Endbereich des Griffes (90) verbunden ist;
der Verstärkungs-Verbindungsbereich (92) vor dem Griff (90) angeordnet ist;
ein Teil, der entlang des Verstärkungs-Verbindungsbereichs (92) am meisten nach vorne herausgestreckt ist, nach vorne von einem hinteren Ende der Kupplungs-Handhabe (48) angeordnet ist, und direkt vor dem Triggerschalter (93) angeordnet ist; und
ein Teil des Verstärkungs-Verbindungsbereichs (92), der hinter der Kupplungs-Handhabe (48) angeordnet ist, sich nach hinten zu dem freien Endbereich des Griffs (90) zurückzieht.

## Revendications

1. Outil à percussion motorisé, comprenant :
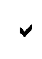 un mode activé en mouvement de percussion pour transférer une force de rotation et appliquer une force de percussion dans une direction axiale de rotation sur une mèche de sortie (50) retenue par un dispositif de serrage (51) ;
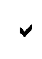 un mode désactivé en mouvement de percussion pour transférer seulement la force de rotation à la mèche de sortie (50) ;
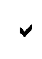 un corps principal (100) logeant le dispositif de serrage (51) à une partie d'extrémité avant de celui-ci ;
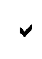 un embrayage, fonctionnant dans le mode désactivé en mouvement de percussion, pour appliquer un couple de fixation réglé sur le dispositif de serrage (51) ;
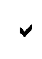 une poignée d'embrayage (48) pour régler le couple de fixation et disposée sur la partie d'extrémité avant du corps principal (100) ; et
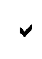 une partie de préhension (90) comprenant une partie de base, qui est reliée au corps principal (100) dans un emplacement entre la partie d'extrémité avant et une partie d'extrémité arrière du corps principal (100), et une partie d'extrémité libre logeant un bloc de batterie (91), un interrupteur de déclenchement (93) étant disposé sur la partie de base de la partie de préhension (90), **caractérisé en ce que** l'outil à percussion motorisé comprend en outre :
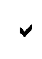 une partie de liaison de renforcement (92) reliée à la partie d'extrémité avant du corps principal (100) à l'arrière de la poignée d'embrayage (48) et également reliée à la partie d'extrémité libre de la partie de préhension (90) ;
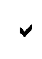 la partie de liaison de renforcement (92) est disposée à l'avant de la partie de préhension (90) ;
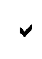 une partie faisant saillie la plus en avant de la partie de liaison de renforcement (92) est disposée à l'avant d'une extrémité arrière de la poignée d'embrayage (48) et est positionnée directement devant l'interrupteur de déclenchement (93) ; et
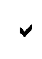 une partie de la partie de liaison de renforcement (92) disposée derrière la poignée d'embrayage (48) recule vers l'arrière vers la partie d'extrémité libre de la partie de préhension (90).
